# EUROPEAN PATENT APPLICATION

(11) **EP 4 338 953 A1**
(43) Date of publication of application: **20.03.2024**
(21) Application number: 23197392.6
(22) Date of filing: 14.09.2023
(51) Int. Cl.: B32B 17/10

(54) **PANEL WITH DIFFERENT VISUAL ATTRIBUTES**

(30) Priority: 19.09.2022 US 202263407846 P
(71) Applicant: Apple Inc., Cupertino, CA 95014 (US)
(72) Inventor: KINGMAN, David E., Cupertino, 95014 (US); MASSCHELEIN, Peter F., Cupertino, 95014 (US); CONNOLLY, Paul M., Cupertino, 95014 (US); GOLKO, Albert J., Cupertino, 95014 (US)
(74) Representative: COPA Copenhagen Patents

(57) **Abstract**

A panel (100) of a structure includes an outer layer (220) and an inner layer (222) that is positioned closer to an interior surface (104) of the structure than the outer layer (220). An intermediate layer (224) is positioned between the outer layer (220) and the inner layer (222), and a mask layer (106) is positioned between the outer layer (220) and the intermediate layer (224). The mask layer (106) includes an outer portion (228) and an inner portion (230), where the outer portion (228) is positioned between the outer layer (220) and the intermediate layer (224), and the inner portion (230) is positioned between the outer portion (228) and the intermediate layer (224). The outer portion (228) and the inner portion (230) include different visual attributes.

## Description

### CROSS-REFERENCE TO RELATED APPLICATIONS

This application claims the benefit of United States Provisional Application No. 63/407,846, filed on September 19, 2022, the contents of which are hereby incorporated by reference in its entirety for all purposes.

### FIELD

The present disclosure relates generally to the field of panels coupled with a structure.

### BACKGROUND

A panel can be positioned in various locations on or around a structure and provide a surface through which the external environment can be viewed through the panel. A panel can include, for example, a transparent and/or translucent surface and can be positioned on various portions of the structure.

### SUMMARY

One aspect of the disclosure is a panel of a vehicle that includes an outer layer and an inner layer that is positioned closer to an interior surface of the vehicle than the outer layer. An intermediate layer is positioned between the outer layer and the inner layer, and a mask layer is positioned between the outer layer and the intermediate layer. The mask layer includes an outer portion and an inner portion, where the outer portion is positioned between the outer layer and the intermediate layer, and the inner portion is positioned between the outer portion and the intermediate layer. The outer portion and the inner portion include different visual attributes.

Another aspect of the disclosure is a panel of a vehicle that includes an outer layer and an inner layer that is positioned closer to an interior surface of the vehicle than the outer layer. An intermediate layer is positioned between the outer layer and the inner layer, and an outer mask layer is positioned between the intermediate layer and the inner layer. An inner mask layer is positioned between the outer mask layer and the inner layer, and a width of the inner mask layer is greater than a width of the outer mask layer.

Yet another aspect of the disclosure is a panel of a vehicle that includes a monolithic outer layer and an inner mask layer. The inner mask layer includes a visual attribute that approximately matches a visual attribute of an interior surface of the vehicle, and the inner mask layer is positioned closer to an interior surface of a vehicle than the monolithic outer layer. An outer mask layer is positioned between the monolithic outer layer and the inner mask layer.

### BRIEF DESCRIPTION OF THE DRAWINGS

FIG. 1 is an illustration of a panel of a vehicle coupled to an interior surface of the vehicle.
FIGS. 2A-B are illustrations of a cross-section of a portion of the panel of FIG. 1 taken across A-A.
FIGS. 3A-B are illustrations of cross-sections of a portion of another panel.
FIG. 3C is an illustration of portions of the panel of FIGS. 3A-B with different colors.
FIG. 3D is an illustration of portions of the panel of FIGS. 3A-B with different textures.
FIG. 3E is an illustration of portions of the panel of FIGS. 3A-B with different patterns.
FIGS. 4A-B are illustrations of cross-sections of a portion of yet another panel.
FIG. 5 is an illustration of a cross-section of a portion of a panel.

### DETAILED DESCRIPTION

The disclosure herein relates to a panel of a vehicle that allows occupants of the vehicle to view the external environment through the panel. The panel may include various layers that are coupled together to create the panel. In some implementations, the panel may include an outer layer and an inner layer that both include glass. The panel may also include an intermediate layer that includes a polymer, and the outer layer, the inner layer, and the intermediate layer are coupled with a heating process. The panel may also include a mask layer which is configured to obscure an adhesive used to bond the panel to the vehicle, and the mask layer can typically be viewed by occupants within the vehicle.

In some embodiments, the mask layer includes an inner portion and an outer portion that have different visual attributes. For example, the outer portion may include a color that is different than an interior surface of the vehicle and the inner portion may include a color that approximately matches the interior surface of the vehicle. Additionally, the outer portion may include a texture that is different than the interior surface of the vehicle and the inner portion may include a texture that approximately matches the texture of the interior surface of the vehicle.

In some arrangements, the mask layer includes two mask layers, an inner mask layer and an outer mask layer, and a width of the inner mask layer is greater than a width of the outer mask layer. A portion of the outer mask layer may be obscured from view based on the width of the inner mask layer. More specifically, the inner mask layer may obscure the outer mask layer when the panel is viewed from a seat of the vehicle.

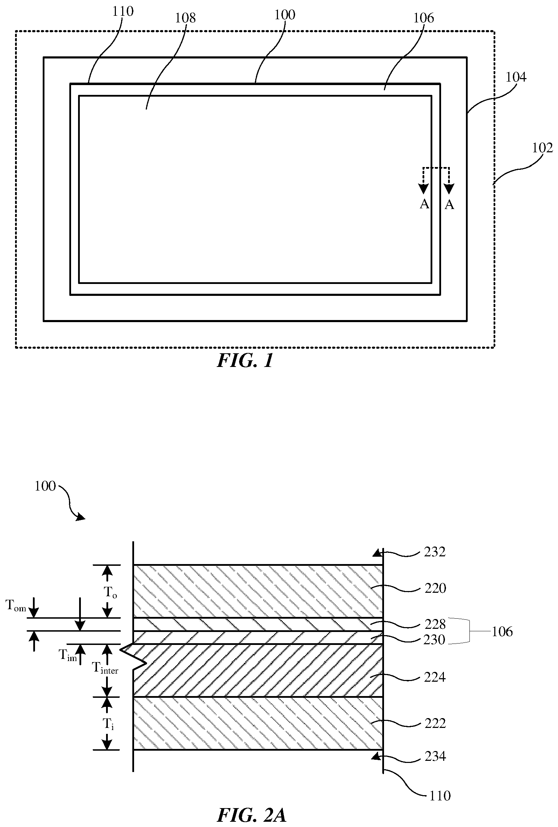

FIG. 1 is an illustration of a panel 100 of a vehicle 102 coupled to an interior surface 104 of the vehicle 102. In some implementations, the vehicle 102 can be any type of vehicle including, but not limited to, gas or diesel-powered vehicles, electric vehicles, boats or other marine vehicles, aircraft (e.g., airplanes, helicopters, etc.), remote-controlled vehicles, etc. In some implementations, the vehicle 102 is an autonomous vehicle. In some implementations, the vehicle 102 may be a passenger vehicle configured to hold one or more occupants.

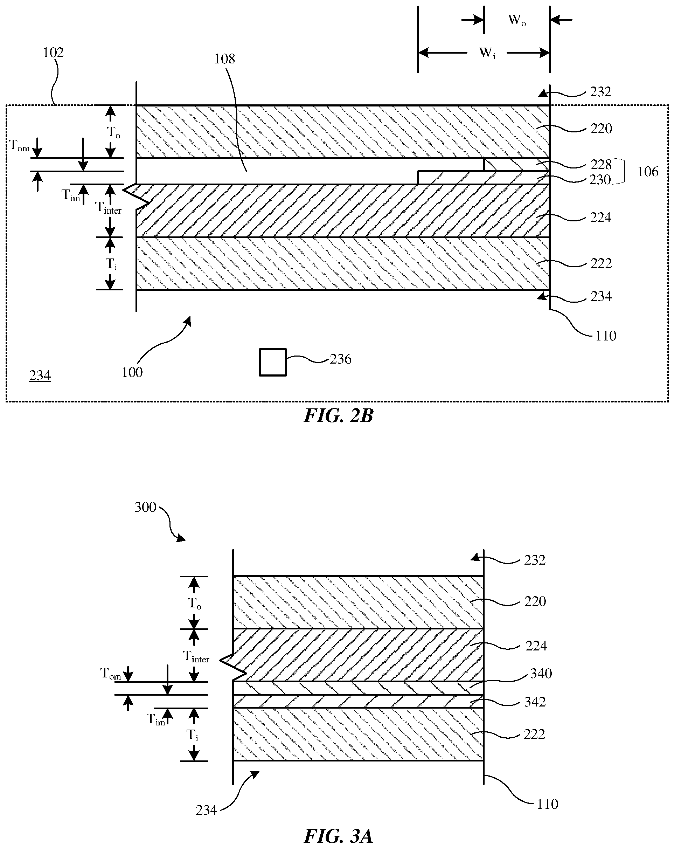

The panel 100 may be positioned in various locations on the vehicle 102. For example, the panel 100 may be positioned in a front portion, a rear portion, a top portion, a bottom portion, and/or in various locations around the sides or perimeter of the vehicle 102. In some implementations, the vehicle 102 may include only one of the panel 100. In some implementations, the panel 100 may extend over multiple locations described. For example, the panel 100 may extend from the front portion to the rear portion of the vehicle 102, from one side to another side of the vehicle 102, from the top portion to the bottom portion of the vehicle 102, and/or combinations thereof. Accordingly, the panel 100 may be configured to provide a panoramic view of an external environment 232 (shown in FIGS. 2-5) located outside of the vehicle 102.

The panel 100 is configured to be coupled to an interior surface 104 of the vehicle 102. In some embodiments, the interior surface 104 is an interior trim configured to cover functional components of the vehicle 102 (e.g., structural components, electrical components, etc.) for aesthetic reasons. In some embodiments, the panel 100 includes a mask layer 106 configured to hide an adhesive used to secure the panel 100 to the vehicle 102 when the mask layer 106 is viewed from outside the vehicle 102. The mask layer 106 may be a coating applied to a surface of one of the layers of the panel 100 and may include a ceramic material that is adhered to the panel 100 via a heating process. The mask layer 106 may also include a solid band of ceramic material extending around a perimeter of the panel 100 from an outer edge 110 of the panel 100 and gradually tapers to include distinct dots (e.g., frits) that extend from the solid band toward a central portion 108 of the panel 100. In addition, the mask layer 106 may include additional and/or other materials such as paint, ink, adhesives, and/or combinations thereof. In some implementations, the mask layer 106 includes a black color and can be viewed from an interior 234 of the vehicle 102 (shown in FIG. 2). As shown in FIG. 1, the mask layer 106 extends around a periphery of the panel 100 and defines the central portion 108 through which occupants can view the external environment 232.

FIGS. 2A-B are illustrations of a cross-section of a portion of the panel 100 of FIG. 1 taken across A-A. As shown in FIG. 2A, the panel 100 includes an outer layer 220 and an inner layer 222 that is positioned closer to the interior 234 of the vehicle 102 than the outer layer 220. An intermediate layer 224 is positioned between the outer layer 220 and the inner layer 222. The outer layer 220, the inner layer 222, and the intermediate layer 224 may be transparent or translucent (e.g., formed from transparent or translucent material) to allow transmission of light through the panel 100. In some implementations, the outer layer 220 and the inner layer 222 may include glass. The outer layer 220 and the inner layer 222 may also include a transparent or translucent polymer. In some embodiments, the intermediate layer 224 may also include a transparent or translucent polymer such as polyvinyl butyral ("PVB"), an adhesive, or a combination thereof. Accordingly, each of the outer layer 220, the inner layer 222, and the intermediate layer 224 are at least partially translucent. The outer layer 220, the inner layer 222, and the intermediate layer 224 may be joined via chemical and/or thermal processes to create a tempered material or a laminated material.

The mask layer 106 is positioned between the outer layer 220 and the inner layer 222 and includes an outer portion 228 and an inner portion 230. In some embodiments, the mask layer 106 is added in a single application (e.g., the outer portion 228 and the inner portion 230 are applied at the same time). The mask layer 106 may also be added in more than one application (e.g., the outer portion 228 and the inner portion 230 are applied at different times). The outer portion 228 is positioned between the outer layer 220 and the intermediate layer 224, and the inner portion 230 is positioned between the outer portion 228 and the intermediate layer 224. In some implementations, the outer portion 228 may include a ceramic material. The outer portion 228 may also be opaque such that a view of the external environment 232 is limited through the outer portion 228. In some implementations, the outer portion 228 includes a black color. The inner portion 230 may include a ceramic material arranged on the panel 100 in a manner similar to the outer portion 228. The inner portion 230 may also include an ink (e.g., an organic ink or an inorganic ink). In some implementations, the inner portion 230 is also opaque such that the mask layer 106 is opaque.

In some implementations, the outer portion 228 and the inner portion 230 include different visual attributes (e.g., characteristics that can be viewed from within and/or from outside the vehicle 102). For example, the visual attribute may include a color, a texture, a pattern, or a combination thereof. In addition, the visual attributes of the outer portion 228 and the inner portion 230 may be similar to or different from visual attributes of the interior surface 104 of the vehicle 102. In some embodiments, a visual attribute of the inner portion 230 approximately matches a visual attribute of the interior surface 104 of the vehicle 102. More specifically, the visual attribute of the inner portion 230 and the visual attribute of the interior surface 104 may be a color, and the color of the inner portion 230 may approximately match the color of the interior surface 104 of the vehicle 102. For example, the interior surface 104 of the vehicle 102 may include an interior trim that may have a brown color, and the inner portion 230 may include a brown color that approximately matches the brown color of the interior surface 104 of the vehicle 102. For example, the colors of the interior surface 104 and the inner portion 230 may have red, green, and blue ("RGB") values and/or cyan, magenta, yellow, and black ("CMYK") values that are within ten percent of each other. Using the above example, the brown color of the interior surface 104 may have an RGB value of (135, 62, 35) and/or a CMYK value of (0, 54, 74, 47). To approximately match the brown color of the interior surface 104, the brown color of the inner portion 230 may include ranges of RGB values of (122-149, 56-68, 32-39) and CMYK values of (0, 49-59, 67-81, 42-52). Approximately matching the colors as described reduces a contrast in colors between the interior surface 104 of the vehicle 102 and the panel 100 that would otherwise exist if the colors were not approximately matched.

As another example, the visual attribute of the inner portion 230 and the visual attribute of the interior surface 104 of the vehicle 102 may be a texture, and the texture of the inner portion 230 may approximately match the texture of the interior surface 104 of the vehicle 102. For example, the textures of the inner portion 230 and the interior surface 104 may have a mismatch of ten percent or less at the edges of the two surfaces that are adjacent to each other. More specifically, the interior surface 104 of the vehicle 102 may include a texture that includes alternating peaks and valleys, and the inner portion 230 may include a texture that approximately matches the alternating peaks and valleys of the interior surface 104 of the vehicle 102 (e.g., the mismatch between the peaks and valleys at an edge of the interior surface 104 and the peaks and valleys at an adjacent edge of the inner portion 230 is less than ten percent). Approximately matching the textures as described reduces a contrast in textures between the interior surface 104 of the vehicle 102 and the panel 100 that would otherwise exist if the textures were not approximately matched.

In addition, the visual attribute of the inner portion 230 and the visual attribute of the interior surface 104 of the vehicle 102 may be a pattern, and the pattern of the inner portion 230 may approximately match the pattern of the interior surface 104 of the vehicle 102. For example, the patterns of the inner portion 230 and the interior surface 104 may have a mismatch of ten percent or less at the edges of the two surfaces that are adjacent to each other. For example, the interior surface 104 of the vehicle 102 may include a pattern that includes a wood grain, and the inner portion 230 may include a pattern that approximately matches the wood grain of the interior surface 104 of the vehicle 102 (e.g., the mismatch between the wood grain pattern at an edge of the interior surface 104 and the wood grain pattern at an adjacent edge of the inner portion 230 is less than ten percent). Approximately matching the patterns as described reduces a contrast in patterns between the interior surface 104 of the vehicle 102 and the panel 100 that would otherwise exist if the patterns were not approximately matched.

As shown in FIG. 2B, in some implementations a width Wi of the inner portion 230 is greater than a width Wₒ of the outer portion 228. For example, the width Wi of the inner portion 230 may extend further from the outer edge 110 toward the central portion 108 of the panel 100 than the width Wₒ of the outer portion 228. Arranged as described, the inner portion 230 may obscure at least a portion of the outer portion 228 when viewed from within the vehicle 102 (e.g., from a seat 236 of the vehicle 102).

FIGS. 3A-B are illustrations of a cross-section of a portion of another panel 300. The panel 300 is similar to the panel 100 but differs with respect to the structure of the layers and the mask layers. As shown in FIG. 3A, the panel 300 includes the outer layer 220 and the inner layer 222 that is positioned closer to the interior 234 of the vehicle 102 than the outer layer 220. The panel 300 also includes the intermediate layer 224 that is positioned between the outer layer 220 and the inner layer 222. In contrast to the mask layer 106 of FIG. 2, the panel 300 includes two different mask layers, an outer mask layer 340 that is positioned between the intermediate layer 224 and the inner layer 222, and an inner mask layer 342 positioned between the outer mask layer 340 and the inner layer 222. The outer mask layer 340 may be configured to obscure a view of an adhesive used to secure the panel 300 to the vehicle 102.

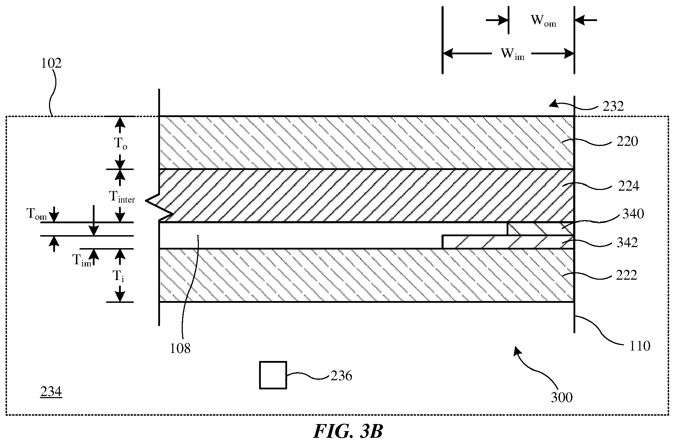

As shown in FIG. 3B, in some implementations a width Wᵢₘ of the inner mask layer 342 is greater than a width Wₒₘ of the outer mask layer 340 (e.g., the width Wᵢₘ of the inner mask layer 342 that extends from the outer edge 110 of the panel 300 toward the central portion 108 of the panel 300 is greater than the width Wₒₘ of the outer mask layer 340 that extends from the outer edge 110 of the panel 300 toward the central portion 108 of the panel 300). As described with respect to the mask layer 106 of FIG. 1, by arranging the widths of the inner mask layer 342 and the outer mask layer 340 in this manner, the inner mask layer 342 is configured to obscure at least a portion of the outer mask layer 340 when viewed from within the vehicle 102 (e.g., from the seat 256 of the vehicle 102). More specifically, the inner mask layer 342 is configured to obscure the outer mask layer 340 when the panel 300 is viewed from within the vehicle 102.

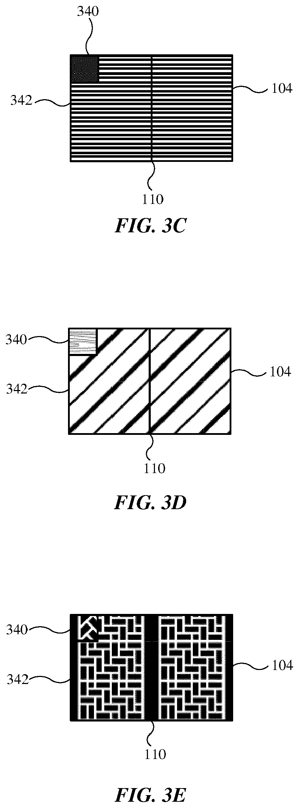

FIGS. 3C-E are illustrations of a view of the inner mask layer 342 and the outer mask layer 340 from within the vehicle. A portion of the inner mask layer 342 is shown as being cut away to show the outer mask layer, which would otherwise be blocked by the inner mask layer 342. As shown in FIG. 3C, the inner mask layer 342 and the outer mask layer 340 may include different colors. For example, the color of the outer mask layer 340 may include black (e.g., the outer mask layer 340 may include a black ceramic material as described with reference to the mask layer 106). The inner mask layer 342 may include a color other than black. For example, the color of the inner mask layer 342 may include blue. More specifically, the inner mask layer 342 may include a color that approximately matches a color of the interior surface 104 of the vehicle 102. As described above, the interior surface 104 of the vehicle 102 may include an interior trim, and the interior trim may include, for example, the blue color. The inner portion 230 may also include a blue color that approximately matches the blue color of the interior trim of the vehicle 102. Approximately matching the colors as described reduces a contrast in colors between the interior surface 104 of the vehicle 102 and the panel 300 that would otherwise exist if the colors were not approximately matched.

As shown in FIG. 3D, the inner mask layer 342 and the outer mask layer 340 may include different textures. For example, the texture of the outer mask layer 340 may include a relatively rough texture (e.g., the surface of the outer mask layer 340 includes a relatively high surface roughness measurement). In the example embodiment shown in FIG. 3C, the outer mask layer may include a wood texture. The inner mask layer 342 may include a texture that approximately matches a texture of the interior surface 104 (e.g., an interior trim) of the vehicle 102. For example, the texture of the interior surface 104 of the vehicle 102 may include a relatively smooth texture (e.g., the surface of the interior trim includes a relatively low surface roughness measurement). The inner mask layer 342 may also include a texture that has a relatively low surface roughness measurement. In the example embodiment shown in FIG. 3C, the textures of the inner mask layer 342 and the interior surface 104 are similar to a smooth plastic. As described, approximately matching the textures as described reduces a contrast in textures between the interior surface 104 of the vehicle 102 and the panel 300 that would otherwise exist if the textures were not approximately matched.

As shown in FIG. 3E, the inner mask layer 342 includes a visual attribute that approximately matches a visual attribute (e.g., a color, a texture, a pattern, or a combination thereof) of the interior surface 104 (e.g., an interior trim) of the vehicle 102. In addition, the visual attributes of the outer mask layer 340 and the inner mask layer 342 may be different. For example, a texture, color, or pattern (or a combination thereof) of the inner mask layer 342 may be different than a texture, color, or pattern (or a combination thereof) of the outer mask layer 340. In some implementations, the difference in visual attributes may be related to a material of the inner mask layer 342 and a material of the outer mask layer 340. For example, the inner mask layer 342 may include an ink (e.g., an organic ink, an inorganic ink, or a combination thereof), and the outer mask layer 340 may include a ceramic, and the ink and ceramic may include visual attributes that differ. In the example embodiment shown in FIG. 3E, the outer mask layer 342 may include a herringbone pattern. The inner mask layer 340 may include a cobblestone pattern and may approximately match a cobblestone pattern of the interior surface 104.

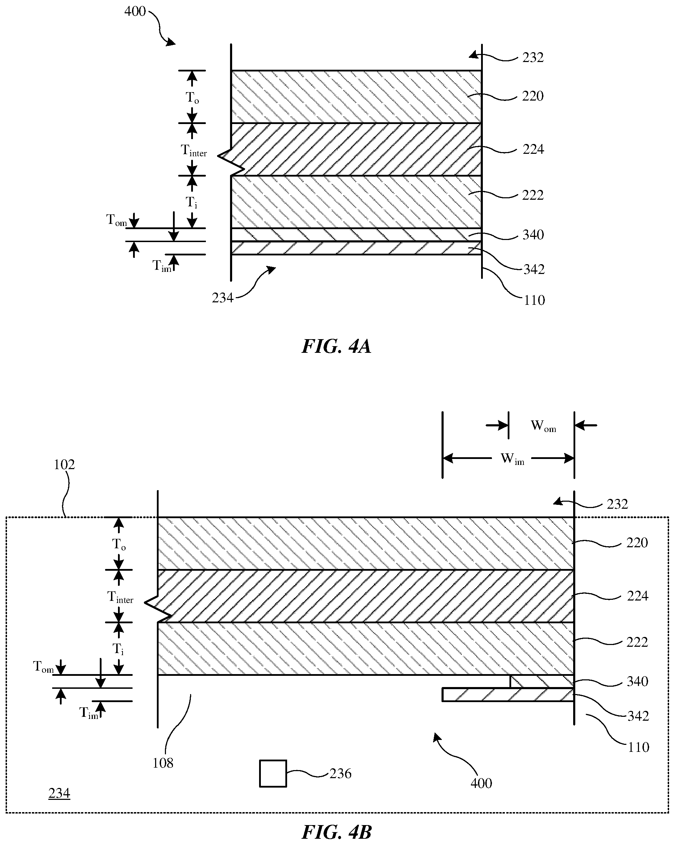

FIGS. 4A-B are illustrations of a cross-section of a portion of another panel 400. The panel 400 is similar to the panels 100, 300 but differs with respect to the structure of the layers. As shown in FIG. 4A, the panel 400 includes the outer layer 220 and the inner mask layer 342 that is positioned closer to the interior 234 of the vehicle 102 than the outer layer 220. The panel 400 also includes the outer mask layer 340 that is positioned between the outer layer 220 and the inner mask layer 342. The inner layer 222 is positioned between the outer mask layer 340 and the outer layer 220, and the intermediate layer 224 is positioned between the inner layer 222 and the outer layer 220.

As shown in FIG. 4B, the width Wᵢₘ of the inner mask layer 342 may be greater than the width Wₒₘ of the outer mask layer 340 such that the inner mask layer 342 is configured to obscure the outer mask layer 340 when viewed from within the vehicle 102 (e.g., from the seat 256 of the vehicle 102). More specifically, the inner mask layer 342 is configured to obscure the outer mask layer 340 when the panel 400 is viewed from within the vehicle 102.

In addition to the arrangements of layers shown in FIGS. 2-4, the outer mask layer 340 and the inner mask layer 342 may be positioned in other arrangements relative to the outer layer 220, the intermediate layer 224, and the inner layer 222. For example, the outer mask layer 340 may be positioned between the outer layer 220 and the intermediate layer 224, and the inner mask layer 342 may be positioned adjacent to the inner layer 222 such that the intermediate layer 224 and the inner layer 222 are between the outer mask layer 340 and the inner mask layer 342. As another example, the outer mask layer 340 may be positioned between the intermediate layer 224 and the inner layer 222, and the inner mask layer 342 may be positioned adjacent to the inner layer 222 such that the inner layer 222 is between the outer mask layer 340 and the inner mask layer 342. Other configurations may also be implemented.

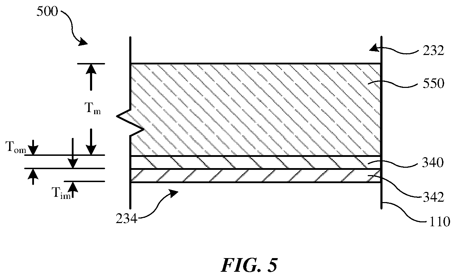

FIG. 5 is an illustration of a cross-section of a portion of a panel 500. The panel 500 includes a monolithic outer layer 550, the outer mask layer 340, and the inner mask layer 342. The monolithic outer layer 550 may include a single layer of glass or polymer. The inner mask layer 342 is positioned closer to the interior 234 of the vehicle 102 than the monolithic outer layer 550, and the outer mask layer 340 is positioned between the monolithic outer layer 550 and the inner mask layer 342.

As shown in FIGS. 2-5, the various layers of the panels 100, 300, 400, 500 are shown as having various thicknesses. For example, the outer layer 220 has a thickness Tₒ and the inner layer 222 has a thickness Tᵢ. The monolithic layer 550 has a thickness Tₘ. The outer mask layer 340 has a thickness Tₒₘ and the inner mask layer 342 has a thickness Tᵢₘ. In some implementations, Tₒ and Tᵢ may be similar and may both be larger than Tₒₘ and Tᵢₘ. More specifically, a ratio of the thicknesses of Tₒ to Tᵢ may be approximately 1:1 (e.g., the ratio may be within fifteen percent of exactly 1:1). In some implementations, the intermediate layer 224 has a thickness Tᵢₙₜₑᵣ that is smaller than both Tₒ and Tᵢ. Tᵢₙₜₑᵣ may also be larger than both Tₒₘ and Tᵢₘ. More specifically, a ratio of Tₒ and/or Tᵢ to Tᵢₙₜₑᵣ may be approximately 2:1 (e.g., the ratio may be within fifteen percent of exactly 2:1). In some implementations, Tₒ and Tᵢ may each be approximately 0.08 inches, and Tᵢₙₜₑᵣ may be approximately 0.04 inches. In some implementations, Tₒ and Tᵢ may have similar thicknesses, and a ratio of the thickness of, for example, Tₒ to Tₒₘ and Tᵢₘ may be approximately 400:1:1 (e.g., the ratio may be within fifteen percent of exactly 400:1:1). In the example implementation provided, Tₒₘ and Tᵢₘ may be approximately 0.0002 inches. In some embodiments, Tₒₘ and Tᵢₘ may be different. For example, Tₒₘ may be approximately 0.0002 inches and Tᵢₘ may be approximately 0.0001 inches. Accordingly, a ratio of the Tₒₘ to Tᵢₘ may be approximately 2:1.

As described, one aspect of the disclosure is a panel of a vehicle that includes an outer layer and an inner layer that is positioned closer to an interior surface of the vehicle than the outer layer. An intermediate layer is positioned between the outer layer and the inner layer, and a mask layer is positioned between the outer layer and the intermediate layer. The mask layer includes an outer portion and an inner portion, where the outer portion is positioned between the outer layer and the intermediate layer, and the inner portion is positioned between the outer portion and the intermediate layer. The outer portion and the inner portion each include different visual attributes.

In some implementations, the inner portion is configured to have a visual attribute that approximately matches a visual attribute of the interior surface of the vehicle. The visual attribute may be a color. The visual attribute may also be a texture.

In some implementations, the outer layer, the inner layer, and the intermediate layer are each at least partially translucent, and the mask layer is opaque. The inner portion may also be opaque such that a view through the panel of an external environment is limited.

In some implementations, the inner portion and the outer portion each include different materials. For example, the inner portion may include an organic ink and the outer portion may include a ceramic.

In some implementations, the inner portion and the outer portion each have a width, and the width of the inner portion is greater than the width of the outer portion.

Another aspect of the disclosure is a panel of a vehicle that includes an outer layer and an inner layer that is positioned closer to an interior surface of the vehicle than the outer layer. An intermediate layer is positioned between the outer layer and the inner layer, and an outer mask layer is positioned between the intermediate layer and the inner layer. An inner mask layer is positioned between the outer mask layer and the inner layer, and a width of the inner mask layer is greater than a width of the outer mask layer.

In some implementations, the inner mask layer and the outer mask layer each include different colors. For instance, a color of the outer layer may include black, and a color of the inner mask layer may approximately match a color of the interior surface of the vehicle.

In some implementations, the inner mask layer is configured to obscure a portion of the outer mask layer when viewed from within the vehicle.

In some implementations, the inner mask layer and the outer mask layer each include different textures. The inner mask layer may approximately match a texture of an interior surface of the vehicle.

Another aspect of the disclosure is a panel of a vehicle that includes a monolithic outer layer and an inner mask layer. The inner mask layer includes a visual attribute that approximately matches a visual attribute of an interior surface of the vehicle, and the inner mask layer is positioned closer to an interior surface of a vehicle than the monolithic outer layer. An outer mask layer is positioned between the monolithic outer layer and the inner mask layer.

In some implementations, the inner mask layer is configured to have a color that approximately matches a color of the interior surface of the vehicle. The inner mask layer may also be configured to have a texture that approximately matches a texture of the interior surface of the vehicle. For example, the texture of the inner mask layer may be different than the texture of the outer mask layer.

In some implementations, the inner mask layer and the outer mask layer each include different materials. For example, the inner mask layer may include an organic ink and the outer mask layer may include a ceramic.

In some implementations, the inner mask layer and the outer mask layer each have a width, and the width of the inner mask layer is greater than the width of the outer mask layer.

As described above, one aspect of the present technology is the gathering and use of data available from various sources for use during operation of a vehicle that includes the panels 100, 300, 400. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference related information that allows adjustment of operation of the vehicle according to the user preference related information. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for operation of the vehicle, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, the user preference information may be determined each time the vehicle is used, such as by entering the user preference related information in real time, and without subsequently storing the information or associating with the particular user.

Exemplary embodiments of the present disclosure are set out in the following items:
1. A panel of a vehicle, comprising:
   an outer layer;
   an inner layer that is positioned closer to an interior surface of the vehicle than the outer layer;
   an intermediate layer positioned between the outer layer and the inner layer; and
   a mask layer positioned between the outer layer and the intermediate layer and including an outer portion and an inner portion,
   wherein the outer portion is positioned between the outer layer and the intermediate layer and the inner portion is positioned between the outer portion and the intermediate layer, and
   wherein the outer portion and the inner portion include different visual attributes.
2. The panel of item 1, wherein the visual attribute of the inner portion approximately matches a visual attribute of the interior surface of the vehicle.
3. The panel of item 2, wherein the visual attribute of the inner portion and the visual attribute of the interior surface is a color.
4. The panel of any of items 2-3, wherein the visual attribute of the inner portion and the visual attribute of the interior surface is a texture.
5. The panel of any of items 1-4, wherein the outer layer, the inner layer, and the intermediate layer are each at least partially translucent, and the mask layer is opaque.
6. The panel of any of items 1-5, wherein a width of the inner portion is greater than a width of the outer portion.
7. The panel of any of items 1-6, wherein the inner portion includes an organic ink and the outer portion includes a ceramic.
8. The panel of any of items 1-7, wherein the inner portion is opaque.
9. A panel of a vehicle, comprising:
   an outer layer;
   an inner layer that is positioned closer to an interior surface of the vehicle than the outer layer;
   an intermediate layer positioned between the outer layer and the inner layer;
   an outer mask layer positioned between the intermediate layer and the inner layer; and
   an inner mask layer positioned between the outer mask layer and the inner layer, wherein a width of the inner mask layer is greater than a width of the outer mask layer.
10. The panel of item 9, wherein the inner mask layer and the outer mask layer include different colors.
11. The panel of item 10, wherein a color of the outer mask layer includes black, and wherein a color of the inner mask layer approximately matches a color of an interior surface of the vehicle.
12. The panel of any of items 9-11, wherein from within the vehicle, the inner mask layer is configured to obscure a portion of the outer mask layer.
13. The panel of any of items 9-12, wherein the inner mask layer and the outer mask layer include different textures.
14. The panel of item 13, wherein a texture of the inner mask layer approximately matches a texture of an interior surface of the vehicle.
15. A panel of a vehicle, comprising:
   a monolithic outer layer;
   an inner mask layer that includes a visual attribute that approximately matches a visual attribute of an interior surface of the vehicle, wherein the inner mask layer is positioned closer to an interior surface of the vehicle than the monolithic outer layer; and
   an outer mask layer positioned between the inner mask layer and the monolithic outer layer.
16. The panel of item 15, wherein the visual attribute of the inner mask layer and the visual attribute of the interior surface of the vehicle are colors.
17. The panel of any of items 15-16, wherein the visual attribute of the inner mask layer and the visual attribute of the interior surface of the vehicle are textures.
18. The panel of item 17, wherein the texture of the inner mask layer is different than the texture of the outer mask layer.
19. The panel of any of items 15-18, wherein a width of the inner mask layer is greater than a width of the outer mask layer.
20. The panel of any of items 15-19, wherein the inner mask layer includes an ink and the outer mask layer includes a ceramic.

## Claims

1. A panel of a vehicle, comprising:
an outer layer;
an inner layer that is positioned closer to an interior surface of the vehicle than the outer layer;
an intermediate layer positioned between the outer layer and the inner layer; and
a mask layer positioned between the outer layer and the intermediate layer and including an outer portion and an inner portion,
wherein the outer portion is positioned between the outer layer and the intermediate layer, and the inner portion is positioned between the outer portion and the intermediate layer, and
wherein the outer portion and the inner portion include different visual attributes.

2. The panel of claim 1, wherein the visual attribute of the inner portion approximately matches a visual attribute of the interior surface of the vehicle.

3. The panel of claim 2, wherein the visual attribute of the inner portion and the visual attribute of the interior surface is a color.

4. The panel of claim 2, wherein the visual attribute of the inner portion and the visual attribute of the interior surface is a texture.

5. The panel of claim 2, wherein the visual attribute of the inner portion and the visual attribute of the interior surface is a pattern.

6. The panel of any of claims 1-5, wherein the outer layer, the inner layer, and the intermediate layer are each at least partially translucent, and the mask layer is opaque.

7. The panel of any of claims 1-6, wherein a width of the inner portion is greater than a width of the outer portion.

8. The panel of any of claims 1-7, wherein the inner portion includes an organic ink and the outer portion includes a ceramic.

9. The panel of any of claims 1-8, wherein the inner portion is opaque.

10. The panel of any of claim 1-9, wherein the inner portion and the outer portion include different colors.

11. The panel of claim 10, wherein a color of the outer portion includes black, and wherein a color of the inner portion approximately matches a color of an interior surface of the vehicle.

12. The panel of any of claims 1-11, wherein from within the vehicle, the inner portion is configured to obscure the outer portion.

13. The panel of any of claims 1-12, wherein the outer layer has an outer layer thickness, the outer portion has an outer portion thickness, and inner portion has an inner portion thickness, and a ratio of the outer layer thickness to the outer portion thickness and the inner portion thickness is approximately 400:1:1.

14. The panel of any of claims 1-13, wherein the outer layer has an outer layer thickness, the inner layer has an inner layer thickness, and a ratio of the outer layer thickness to the inner layer thickness is approximately 1:1.

15. The panel of any of claims 1-14, wherein the outer layer has an outer layer thickness, the intermediate layer has an intermediate layer thickness, and a ratio of the outer layer thickness to the intermediate layer thickness is approximately 2:1.
